# EUROPÄISCHE PATENTSCHRIFT

(11) **EP 2 722 523 B1**
(45) Veröffentlichungstag und Bekanntmachung des Hinweises auf die Patenterteilung: **07.01.2015**
(21) Anmeldenummer: 12306302.6
(22) Anmeldetag: 22.10.2012
(51) Int. Cl.: F03D 11/00, H02G 3/04, H02G 11/00, H02G 13/00

(54) **Anordnung zum Schutz von elektrischen Leitungen gegen mechanische Beschädigungen**
Assembly for the protection of electrical lines against mechanical damage
Agencement destiné à protéger des conduites électriques contre les dommages mécaniques

(43) Veröffentlichungstag der Anmeldung: 23.04.2014
(73) Patentinhaber: Nexans, 75008 Paris (FR)
(72) Erfinder: Grögl, Ferdinand, 90403 Nürnberg (DE); Gemmel, Alfred, 90562 Kalchreuth (DE)
(74) Vertreter: Döring, Roger

(56) Entgegenhaltungen:
- WO-A1-2004/110704
- FR-A1- 2 599 568

## Beschreibung

Die Erfindung bezieht sich auf eine Anordnung zum Schutz von elektrischen Leitungen gegen mechanische Beschädigungen, die zum elektrisch leitenden Verbinden eines in einer Vorrichtung angeordneten, um seine Achse drehbaren elektrischen Geräts mit einem Festpunkt der Vorrichtung vorgesehen sind.

Vorrichtungen mit einem elektrischen Gerät im Sinne der Erfindung sind beispielsweise Windkraftanlagen und Roboter. Elektrische Leitungen, die mit Vorteil flexibel ausgeführt sind, werden dabei beispielsweise zum elektrisch leitenden Anschluß an den Generator einer Windkraftanlage oder auch zum elektrisch leitenden Verbinden von Robotern mit einer ortsfesten Spannungsquelle eingesetzt. Die Leitungen müssen mechanisch belastbar sein, mit einer auf lange Zeit gleichbleibenden Biegefestigkeit. Von besonderer Bedeutung für solche Leitungen ist ihre Festigkeit gegenüber Torsionsbelastungen, weil beispielsweise der Generator einer Windkraftanlage dauernd um seine Achse gedreht wird, auch mit zwei oder mehr vollständigen Umdrehungen in der gleichen Drehrichtung. Andererseits müssen Roboter mit fortschreitender Technik immer beweglicher werden, damit sie beispielsweise entlang von Fertigungsstraßen hin- und herbewegt werden können. Die Leitungen werden also insbesondere bei diesen Einsatzfällen dauernd in wechselnden Richtungen tordiert. In der Praxis werden daher Leitungen bzw. damit ausgerüstete Anordnungen gefordert, die beispielsweise bis zu fünf Millionen Torsionszyklen mit Torsionsbelastungen um Winkel von mindestens ± 360° unbeschadet überstehen.

WO2004/110704 offenbart eine Anordnung zum Schutz von elektrischen Leitungen in einem industriellen Roboter.

Der Erfindung liegt die Aufgabe zugrunde, die eingangs geschilderte Anordnung so zu gestalten, dass in der Vorrichtung eingesetzte elektrische Leitungen beschädigungsfrei um Winkel gedreht werden können, die größer bzw. deutlich größer als ± 360° sind.

Diese Aufgabe wird gemäß der Erfindung dadurch gelöst,
- dass in einem Außenrohr mindestens zwei von einander getrennte, zur Aufnahme je einer elektrischen Leitung dimensionierte Innenrohre angeordnet sind, die innerhalb des Außenrohrs eine größere axiale Länge als das Außenrohr haben, dessen lichte Weite deutlich größer als der Außendurchmesser der Innenrohre ist,
- dass an einem Ende des Außenrohrs eine kreisförmige Scheibe angebracht ist, die in Umfangsrichtung drehbar in dem Außenrohr festgelegt ist, und
- dass die Innenrohre durch voneinander getrennte Durchbrechungen der Scheibe so hindurchgeführt sind, dass sie mit einer vorgebbaren Länge aus derselben herausragen, und
- dass die Innenrohre an dem anderen, der Scheibe abgewandten Ende des Außenrohrs unter Festlegung in einem Halteteil, das in axialer Richtung des Außenrohrs beweglich in demselben angebracht ist, durch dasselbe vollständig hindurchgeführt sind.

Eine "Leitung" im Sinne der Erfindung können ein einzelner isolierter Leiter aber auch eine aus zwei oder mehr isolierten Leitern bestehende Einheit sein. Im folgenden wird stellvertretend für alle möglichen Ausführungsformen weiter das Wort "Leitung" verwendet.

Bei Einsatz dieser Anordnung wird je eine elektrische Leitung in ein Innenrohr so eingezogen, daß sie einerseits mit einem Festpunkt der Vorrichtung, in welche die Anordnung eingebaut wird, und andererseits mit dem um seine Achse drehbaren Gerät derselben elektrisch leitend verbunden werden kann. Die Leitungen sind durch die Innenrohre voneinander getrennt, so dass sie sich innerhalb des Außenrohrs nicht berühren können. Bei einer Drehung des um seine Achse drehbaren Geräts der Vorrichtung und damit einer Drehung der im Außenrohr angeordneten Scheibe, welche durch die in Montageposition durch die fest mit diesem Gerät verbundenen Innenrohre bewirkt wird, können sich daher nur die Innenrohre aneinanderlegen bzw. umeinander herumwinden. Die Leitungen selbst berühren sich in keinem Fall, so dass sie sich auch bei sehr großen Verdrehwinkeln insbesondere nicht gegenseitig beschädigen können. Sie liegen außerdem mit Vorteil lose in den Innenrohren, so dass sie sich in denselben relativ frei bewegen können.

Ein Ausführungsbeispiel des Erfindungsgegenstandes ist in den Zeichnungen dargestellt.

Es zeigen:
Fig. 1 eine Windkraftanlage in schematischer Darstellung.
Fig. 2 eine Anordnung nach der Erfindung ebenfalls in schematischer Darstellung teilweise im Schnitt.
Fig. 3 eine Stirnansicht der Anordnung nach Fig. 2 in vergrößerter Darstellung.
Fig. 4 ein in der Anordnung nach Fig. 2 eingesetztes Innenrohr mit darin befindlicher Leitung, ebenfalls in vergrößerter Darstellung.

Stellvertretend für alle möglichen Einsatzfälle der Anordnung nach der Erfindung, beispielsweise auch bei Robotern, wird dieselbe im folgenden für eine Windkraftanlage erläutert. Der Festpunkt zum Anschluß der Leitungen kann an der Basis der Windkraftanlage, aber auch oberhalb derselben am Ende eines elektrischen Kabels angebracht sein, das im hohlen Mast der Windkraftanlage montiert ist, beispielsweise bis zu 2/3 seiner Höhe. Im folgenden wird die Anordnung für den Fall beschrieben, dass der Festpunkt sich an der Basis befindet.

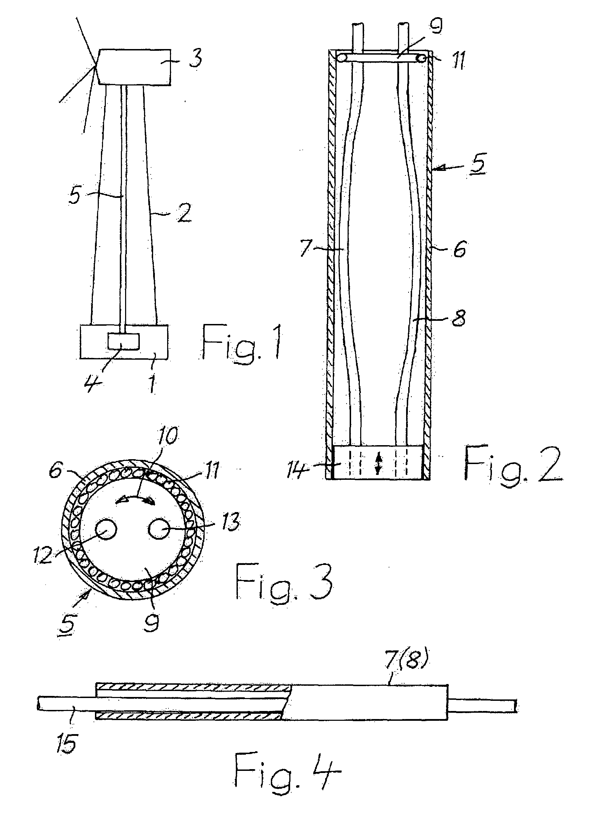

In Fig. 1 ist schematisch eine Windkraftanlage dargestellt, die aus einer Basis 1, einem auf derselben aufgestellten, hohlen Mast 2 und einem auf demselben angeordneten, mit Flügeln ausgerüsteten Generator 3 besteht. In der Basis 1 ist neben anderen Einbauten ein Festpunkt 4 zum elektrisch leitenden Anschluß von in der Windkraftanlage eingesetzten Leitungen installiert. Der Festpunkt 4 ist mit dem Generator 3 als um seine Achse drehbares elektrisches Gerät über mindestens zwei elektrische Leitungen elektrisch leitend verbunden, die in einer Anordnung 5 untergebracht sind.

Die Anordnung 5 weist gemäß Fig. 2 ein Außenrohr 6 auf, in dem im dargestellten Ausführungsbeispiel zwei Innenrohre 7 und 8 liegen. An einem Ende des Außenrohrs 6 ist in demselben eine kreisförmige Scheibe 9 angebracht, die entsprechend dem Doppelpfeil 10 im Außenrohr 6 in beiden Richtungen in Umfangsrichtung drehbar ist. Sie besteht beispielsweise aus einem hochfesten Kunststoff, wie Polyamid, oder aus einem Leichtmetall, wie Aluminium oder einer Aluminiumlegierung. Die Scheibe 9 ist dazu über ein ringförmiges Kugellager 11 im Außenrohr 6 abgestützt. Sie hat zwei Durchbrechungen 12 und 13 zum Hindurchführen der Innenrohre 7 und 8. Die lichte Weite des Außenrohrs 6 ist deutlich größer als der Außendurchmesser der Innenrohre 7 und 8, beispielsweise um den Faktor "2".

In Montageposition ist gemäß Fig. 4 in jedem der Innenrohre 7 bzw. 8 eine elektrische Leitung 15 vorhanden, die jeweils lose im jeweiligen Innenrohr liegt. Die Innenrohre 7 und 8 bestehen aus mechanisch stabilem Material. Sie sind beispielsweise aus Polyurethan mit integrierter Spirale aus federndem Draht aufgebaut. Ein solches, auch als "Schlauch" bezeichnetes Innenrohr ist auf dem Markt erhältlich. Die Leitungen 15 ragen in Montageposition an beiden Enden in axialer Richtung aus den Innenrohren 7 bzw. 8 heraus, damit sie mit dem Generator 3 einerseits und dem Festpunkt 4 andererseits elektrisch leitend verbunden werden können. Das Außenrohr 6 besteht ebenfalls aus mechanisch festem Kunststoff, wie beispielsweise Polyurethan, Polyamid oder Polyvinylchlorid. Es kann auch mit einer federnden Spirale entsprechend den Innenrohren 7 und 8 aufgebaut sein.

In Arbeitsposition der Anordnung haben die Innenrohre 7 und 8 im Außenrohr 6 eine größere Länge als dasselbe, so daß sie gebogen bzw. wendelförmig in demselben verlaufen, so wie es in Fig. 2 angedeutet ist. Dazu können die Innenrohre 7 und 8 an dem der Scheibe 9 abgewandten Ende des Außenrohrs 6 beispielsweise durch ein Halteteil 14 hindurchgeführt sein, in dem sie getrennt voneinander, nach außen offen, festgelegt sind. In den Innenrohren 7 und 8 angebrachte Leitungen können also an diesem Ende aus denselben herausragen. Das Halteteil 14 ist im Außenrohr 6 axial beweglich angebracht. Es ist aber im Außenrohr 6 nicht drehbar. Dazu können beispielsweise am Halteteil 14 radial nach außen weisende Vorsprünge angebracht sein, die in entsprechende Vertiefungen des Außenrohrs 6 eingreifen. Am anderen Ende des Außenrohrs 6 sind die Innenrohre 7 und 8 in den Durchbrechungen 12 und 13 der Scheibe 9 so fest gehalten, daß ihre größere Länge im Außenrohr 6 eingehalten wird.

Die Innenrohre 7 und 8 ragen gemäß Fig. 2 aus der Scheibe 9 um eine vorbestimmte Länge heraus, die ausreicht, um dieselben am Generator 3 zu befestigen, und zwar in Montageposition zusammen mit den in den Innenrohren 7 und 8 befindlichen elektrischen Leitungen 15.

Die Wirkungsweise der Anordnung nach der Erfindung ist beispielsweise folgendes:

In jedes der Innenrohre 7 und 8 der im geschilderten Sinne fertig bestückten Anordnung 5 wird eine Leitung 15 eingezogen. Die Anordnung 5 wird dann im Mast 2 montiert und am Generator 3 einerseits sowie im Bereich des Festpunkts 4 der Basis 1 andererseits festgelegt. Dabei werden die aus der Scheibe 9 herausragenden Innenrohre 7 und 8 so am Generator 3 befestigt, daß sie dessen Drehung um seine Achse mitmachen, und zwar auch um weit über 360° in beiden Drehrichtungen liegende Winkel. Die Leitungen 15 werden an diesem Ende der Anordnung 5 elektrisch leitend mit dem Generator 3 verbunden. Am anderen Ende der Anordnung 5 ragen die Leitungen 15 weit genug aus den Innenrohren 7 und 8 heraus, damit sie mit elektrischen Kontakten des Festpunkts 4 verbunden werden können. Sie müssen andererseits eine ausreichende "Überlänge" haben, beispielsweise durch wendelförmigen Verlauf, damit sie einer axialen Bewegung des Halteteils 14 gegebenenfalls folgen können, ohne dass sie von den Kontakten abreißen.

Bei einer Drehung des Generators 3 wird durch die fest mit demselben verbundenen Innenrohre 7 und 8 auch die Scheibe 9 im Außenrohr 6 gedreht. Dadurch werden die im Innern desselben befindlichen Längen der Innenrohre 7 und 8, welche an dem in der Nähe des Festpunkts 4 befindlichen Ende des Außenrohrs 6 verdrehfest gehalten sind, um die Achse des Außenrohrs 6 gedreht. Die Innenrohre 7 und 8 werden dabei zusammen mit den von ihnen umschlossenen Leitungen 15 wendelförmig verformt, mit einer vom Drehwinkel des Generators 3 abhängigen Anzahl von Windungen. Die Innenrohre 7 und 8 können dieser Verdrehung leicht folgen, weil sie entsprechend Fig. 2 mit Überlänge im Außenrohr 6 angebracht sind. Bei einer Drehung des Generators 3 in Gegenrichtung werden die Innenrohre 7 und 8 ebenso einfach wieder voneinander gelöst. Aufgrund ihrer mechanischen Stabilität kann eine Beschädigung der Innenrohre 7 und 8 beim Verdrehvorgang ausgeschlossen werden. Das gilt auch und besonders für die lose in den Innenrohren 7 und 8 liegenden und durch dieselben geschützten Leitungen 15.

## Patentansprüche

1. Anordnung zum Schutz von elektrischen Leitungen gegen mechanische Beschädigungen, die zum elektrisch leitenden Verbinden eines in einer Vorrichtung angeordneten, um seine Achse drehbaren elektrischen Geräts mit einem Festpunkt der Vorrichtung vorgesehen sind, **dadurch gekennzeichnet,**
- **dass** in einem Außenrohr (6) mindestens zwei von einander getrennte, zur Aufnahme je einer elektrischen Leitung (15) dimensionierte Innenrohre (7,8) angeordnet sind, die innerhalb des Außenrohrs (6) eine größere axiale Länge als das Außenrohr haben, dessen lichte Weite deutlich größer als der Außendurchmesser der Innenrohre (7,8) ist,
- **dass** an einem Ende des Außenrohrs (6) eine kreisförmige Scheibe (9) angebracht ist, die in Umfangsrichtung drehbar in dem Außenrohr (6) festgelegt ist,
- **dass** die Innenrohre (7,8) durch voneinander getrennte Durchbrechungen (12,13) der Scheibe (9) so hindurchgeführt sind, dass sie mit einer vorgebbaren Länge aus derselben herausragen, und
- **dass** die Innenrohre (7,8) an dem anderen, der Scheibe (9) abgewandten Ende des Außenrohrs (6) unter Festlegung in einem Halteteil (14), das in axialer Richtung des Außenrohrs (6) beweglich in demselben angebracht ist, vollständig durch dasselbe hindurchgeführt sind.

2. Anordnung nach Anspruch 1, **dadurch gekennzeichnet, dass** die Innenrohre (7,8) als Kunststoffrohre ausgeführt sind, in deren Wandung eine aus federndem Draht bestehende Spirale integriert ist.

3. Anordnung nach Anspruch 1 oder 2, **dadurch gekennzeichnet, dass** an der Umfangsfläche der Scheibe (9) ein ringförmiges Kugellager (11) angebracht ist, das im Außenrohr (6) abgestützt ist.

4. Anordnung nach einem der Ansprüche 1 bis 3, **dadurch gekennzeichnet, dass** das Halteteil (14) verdrehfest im Außenrohr (6) angeordnet ist.

## Claims

1. An arrangement for the protection of electrical lines a gainst mechanical damage, which are used for the electrically conducting connection of an electrical device, which is rotatable around its axis, with a fixed point which is mounted in the same apparatus as the rotatable device, **characterized in**
- **that** within an outer tube (6)atleasttwo inner tubes (7, 8) fort the insertion of an electrical line each are mounted separate from each other, the outer tube (6) having a significant greater inside width than the outer diameter of the innertubes (7,8) which have within the outertube (6) a greater length as the same,
- **that** a circular disc (9) is positioned atone end of the outertube (6) which is rotatable in circumferential direction within the same,
- **that** the inner tubes (7, 8) penetrate through separated through holes of the disc (9) such, that they project from the same with a predetermined length, and
- **that** the innertubes(7,8) are fixed within a holding member(14) at the other end of the outertube (6) which can be moved within the same in axial direction and the inner tubes (7,8) penetrate the holding member(14) completely.

2. Arrangement according to claim 1, **characterized in** tha t the inner tubes (7,8) are made of plastic with a wall into which a spiral spring wire is integrated.

3. Arrangement according to claim 1 or 2, **characterized in that** a ring-shaped ball-bearing (11) is mo unte d at the circumferential surface of the disc (9), which is supported within the outer tube (6).

4. Arrangement according to one of the claims 1 to 3, **characterized in that** the holding member(14) is positioned within the outer tube (6) in a non-twistable manner.

## Revendications

1. Agencementdestiné à protéger des lignes électriques contre desdommages mécaniques, lesquelles servent à la connexion électriquement conductrice d'un appareil électrique disposé dans un dispositif et pouvant tourner autour de son axe à un point fixe du dispositif, **caractérisé en ce**
- **qu'**au moins deux tubes intérieurs (7, 8) séparés l'un de l'autre et dimensionnés pour recevoir respectivement une ligne électrique (15) sont disposés dans un tube extérieur (6), lesquels tubes intérieurs présentent à l'intérieur du tube extérieur (6) une plus grande longueur axiale que le tube extérieur, dont le diamètre intérieur est nettement supérieur au diamètre extérieur des tubes intérieurs (7, 8),
- **qu'**un disque circulaire (9) est fixé à une extrémité du tube extérieur (6), lequel disque circulaire est fixé dans le tube extérieur(6) de manière rotative dansla direction circonférentielle,
- **que** le tubes intérieurs (7, 8) sont guidés à travers des ouvertures (12, 13) séparées les unes des autres du disque (9), de telle sorte qu'ils fassent saillie d'une longueur pouvant être prédéfinie hors de celui-ci, et
- **que** les tubes intérieurs (7, 8) sont, à l'autre extrémité du tube extérieur (6) opposée au disque (9), entièrement guidés à travers une partie de retenue (14) qui est fixée dans la direction axiale du tube extérieur (6) de manière mobile dans celui-ci, en étant fixés dans cette partie de retenue.

2. Agencement selon la revendication 1, **caractérisé en ce que** les tubes intérieurs (7, 8) sont réalisés sous forme de tubes en plastique, dans la paroi desquels est intégrée une spirale constituée de fil élastique.

3. Agencement selon la revendication 1 ou 2, **caractérisé en ce qu'**un palier à billes annulaire (11) est fixé sur la surface circonférentielle du disque (9), lequel palier à billes est supporté dans le tube extérieur (6).

4. Agencement selon l'une quelconque des revendications 1 à 3, **caractérisé en ce que** la partie de retenue (14) est disposée de manière solidaire en rotation dansle tube extérieur (6).
